# EUROPEAN PATENT APPLICATION

(11) **EP 3 199 293 A1**
(43) Date of publication of application: **02.08.2017**
(21) Application number: 15844179.0
(22) Date of filing: 18.09.2015
(51) Int. Cl.: B23P 21/00

(54) **HIGH-PRECISION MANUFACTURE CONTROL METHOD FOR ELECTROMECHANICAL DEVICE**

(30) Priority: 26.09.2014 CN 201410503650
(71) Applicant: Huang, Guofeng, Huizhou, Guangdong 516007 (CN)
(72) Inventor: HUANG, Dingyou, Huicheng Guangdong 516007 (CN)
(74) Representative: Lösch, Christoph Ludwig Klaus
(86) International application number: PCT/CN2015/090045
(87) International publication number: WO 2016/045552

(57) **Abstract**

The present invention discloses a high-precision manufacturing control method of electromechanical equipment, which comprises: for designs of the components and parts and the components of various electromechanical equipment, setting various precision technical requirement values for respective concentric and geometric tolerances of multiple parts and multiple components with various structures while designing, disposing omnidirectional precision-adjustable movable precise-control components and parts in multi-surface cubes of various components and parts with or without rotary or movable components and parts, various rail kinematic pair parts with guide of components and parts and various mechanical components and electromechanical components, respectively disposing omnidirectional adjustable static precision control components and parts in multi-surface cubes of components and parts various combined components and parts of the above-mentioned omnidirectional precision-adjustable movable precise-control components and parts, and further components and parts disposing omnidirectional precision-control adjustment components and parts at various orientations among components and parts the combinations; manufacturing components and parts according to technical indications; and assembling, carrying out fine adjustment by the cooperation of comparison and calculation of values measured by various instruments and the various technical requirement values set by the design, enabling the above-mentioned combinations to meet various technical requirements for concentric and geometric tolerances, respectively, and then locking.

## Description

### Technical Field

The present invention relates to a high precision manufacturing control method of various electromechanical equipment during designing, manufacturing and assembly processes, and in particular, to a high precision manufacturing control method of electromechanical equipment, which comprises the following steps: enabling various components and parts such as rotors, stators, encoders, and manual or automatic tool changer loosening devices, various components and parts with or without rotary or movable components and parts, various rail kinematic pair parts with guide of components and parts, various mechanical components and electromechanical components to be combined respectively to form concentric and geometric tolerances; respectively disposing omnidirectional precision adjustable precision-control components and parts in multi-surface cubes of various components and parts; carrying out fine adjustment with a coordination of comparison and calculation of values measured by various instruments and precision requirement values for concentric and geometric tolerances to meet the various technical requirements of the concentric and geometric tolerances set by the design, and then locking.

### Background Art

Those precision controlling methods for electromechanical equipment currently applied on the market, entirely relying on the precision level of machining mother machines to determine quality of products, have the following disadvantages: for conventionally designed, manufactured and assembled important components and parts, the manufacturing errors plus accumulated errors during the assembly on the components and parts, cause low precision of the manufactured products, large differences of the distance between the rotor and the stator of equal power electromechanical products, high shaft distal-end runout and shaft vibration values, and large errors in reciprocating repeated positioning precision.

Currently, the major methods of reducing the precision errors of electromechanical equipment include: manual shoveling and grinding, conducting repeated processing and repeated assembly, and applying digital control, space and other compensation systems to reduce the precision error values generated during product processing. The above-mentioned methods may reduce the precision error values generated during product processing, but they have very limited effects on reducing the concentric precision errors of multiple parts, multiple kinematic pairs, multiple components and the combinations thereof as well as precision errors generated in the operation of electromechanical equipment; the need for development of modern science and technology requires more and more for high precision; in particular, strict requirements for precision raises in the high-speed trains, marine vessels, aerospace, defense and military equipment and other fields, but the prior art cannot meet the requirements of modern defense at all.

For example, the global manufactured and applied AC double rotary spindle heads and the spindle motor of about 30 KW: the distance between the rotor and the stator of the motor is about 0.3 mm, the shaft distal-end runout is about 0.01 mm, the shaft vibration is about 1.6 mm/s, the operating range of the AC double rotary spindle heads is 1 m, and the positioning precision is about 0.02 mm, leading to large distance differences between the rotor and the stator of the products, high shaft distal-end runout and shaft vibrations, and large errors in the reciprocating repeated positioning accuracy.

Therefore, in order to enable small distance differences between the rotor and the stator of equal power electromechanical products, low shaft distal-end runout and shaft vibration values, and small errors in the reciprocating repeated positioning accuracy, it can only depend on conducting methods of repeated processing and repeated assembly, and applying digital control, space and other compensation systems for compensation, which will hardly meet the requirements for high precision. Only the comprehensive application of the basic precision of the electromechanical equipment cooperated with digital control, space and other compensation systems can meet the requirements for high precision.

### Summary of the Invention

The present invention aims to, with regard to the above-mentioned disadvantages, according to various design mechanics, design the respective combinations of components and parts with various structures in the electromechanical equipment, set concentric points and various measurement technical indicators and design to provide omnidirectional precision adjustable manufacturing control structures in multi-surface cubes of the various components and parts at the same time among respective combinations through comprehensive calculation of static and dynamic mechanics, to manufacture and control the problems of large distance differences between the rotor and the stator of equal power electromechanical products, high shaft distal-end runout and shaft vibration values, and large errors in reciprocating repeated positioning precision. For example, in a case where implementing electromechanical equipment designed, manufactured and assembled by the present invention is used cooperatively with compensation systems such as a digital control and spatial compensation system, the designed, manufactured and assembled AC double rotary spindle heads, and the spindle motor of about 30 KW: making a distance between the rotor and the stator of each motor be about 0.15 mm, the shaft distal-end runout be about 0.005 mm, the shaft vibration be about 0.8 mm/s, the operating range of the AC double rotary spindle heads be 1 m, and the reciprocating repeated positioning accuracy be about 0.002 mm, so that the product has a small difference of the distance between the rotor and the stator of electromechanical products of the same power, low shaft distal-end runout and shaft vibration value and small errors in the reciprocating repeated positioning accuracy.

The above-mentioned accuracy depends on the accuracy of measuring instruments used when the present invention is implemented in designing, manufacturing and assembly, so that the accuracy for implementing the present invention is determined, for example, if the instruments and meters of higher precision are used cooperatively to implement the present invention, the above-mentioned numerical values can be much lower, and the high-precision requirements of the modernization scientific and technological development can be adequately met.

Ultimate aims of the present invention according to the comparison of the listed and illustrated above-mentioned examples are as follows:
1. thoroughly solving the above-mentioned disadvantages, greatly reducing the energy loss, saving the manpower and material resources, and increasing the efficiency and economic benefit of the whole industry;
2. reducing the overall machining error and the accumulated error on assembly of various conventionally designed and manufactured components and parts, components and electromechanical equipment; and
3. realizing small accuracy error in the distance between the rotor and the stator of each motor, so that as compared with various motors with the same power, the shaft distal-end runout and the shaft vibration value are low, the reciprocating repeated positioning accuracy is high, thus effectively controlling the accuracy error in the displacement generated during the operation of the electromechanical equipment.

The aims of the present invention are realized as follows:
(1) designing:
   designing components and parts with various structures for designs of components and parts of various electromechanical equipment; forming concentric and geometric tolerances according to different use combinations, setting various precision technical requirement values for respective concentric and geometric tolerances of multiple parts, multiple kinematic pairs and multiple components with various structures while designing (in the adjustment process, taking omnidirectional adjustable static precision control adjustment components and parts as corresponding objects, carrying out the adjustment with precision control adjustment components and parts, allowing omnidirectional adjustable movable precision control components and parts to move, carrying out fine adjustment with a coordination of comparison and calculation of values measured by various instruments and the various precision technical requirement values set by the design, respectively enabling the combinations of components and parts with various structures, comprising various components and parts with or without rotary or movable components and parts, various rail kinematic pair parts with guide of components and parts and various mechanical components and electromechanical components to meet the various precision technical requirements for concentric and geometric tolerances, in operation, the respective concentric acting forces of multiple parts, multiple kinematic pairs and multiple components with various structures are balanced), disposing omnidirectional precision adjustable manufacturing control structures in multi-surface cubes of respective combinations of components and parts with various structures comprising various components and parts with or without rotary or movable components and parts, various rail kinematic pair parts with guide of components and parts and various mechanical components and electromechanical components, comprising:
      respectively disposing omnidirectional adjustable movable precision control components and parts in multi-surface cubes of the above-mentioned components and parts with various structures components and parts;
      respectively disposing omnidirectional adjustable static precision control components and parts in multi-surface cubes of the omnidirectional adjustable movable precision control components and parts, and various combined components and parts thereof components and parts;
      further respectively disposing omnidirectional precision control adjustment components and parts in multi-surface cubes of added multiple groups of various components and parts at various orientations among the various omnidirectional adjustable movable precision control components and parts, the various omnidirectional adjustable static precision control components and parts, and the combinations; and
      based on the design of the different use combinations, performing high precision manufacturing control on omnidirectional precision adjustable structures with various structures, and forming various high-precision electromechanical equipment; and setting various precision technical requirements for concentric and geometric tolerances such as concentric straightness, concentric flatness, concentric parallelism and concentric perpendicularity while designing (for example, concentric parallelism is defined as: (1) for a motor, the concentricity is defined during rotation of the rotor around the stator inner shaft, and through the axis cross-sectional profile at any moment, the measure of difference range in the numeral values obtained by measuring distances between the outer diameter plane of the rotor and the inner diameter plane of the parallel stator at multiple positions along the radial distance, defines the parallelism, named as concentric parallelism; and (2) for various power machine motion kinematic pairs, multiple groups of guide rail pairs and various power drives make axial combined motion to define the concentricity, the measure of difference range in the numeral values obtained by measuring distances between the respective center planes of multiple groups of the corresponding guide rail pairs and the respective corresponding central axes of each group on the basis of keeping each power drive along the axial direction as axis center and keeping the corresponding surfaces of two guide rails in parallel, defines the parallelism named as concentric parallelism. Likewise, concentric straightness, concentric flatness, concentric perpendicularity and other concentric and geometric tolerances are defined, and during operation, multiple parts, multiple kinematic pairs and multiple components with various structures are in concentric force balance, respectively);
(2) manufacturing:
   after the design work is completed, purchasing various desired materials, and manufacturing the components and parts with various structures required by the design, mainly comprising: various omnidirectional adjustable movable precision control adjustment components and parts, various omnidirectional adjustable static precision control adjustment components and parts and various omnidirectional precision control adjustment components and parts; and the manufacturing of all components and parts should be subjected to strict quality inspection one by one; and
(3) assembling:
   performing sub-assembly of various mechanical components and electromechanical components after the designing work and the manufacturing work are completed, performing the assembly work of various components and parts of various mechanical components and electromechanical components according to various precision technical requirements for concentric and geometric tolerances for multiple parts and multiple kinematic pairs with various structures set by the design, respectively assembling different use combinations of components and parts with various structures, as well as various omnidirectional adjustable movable precision control components and parts, various omnidirectional adjustable static precision control components and parts and various omnidirectional precision control adjustment components and parts, and respectively assembling and forming various omnidirectional precision adjustable high precision manufacturing control structure components according to different purposes, comprising:
      respectively designing and manufacturing omnidirectional adjustable movable precision control components and parts in multi-surface cube of various components and parts, various components and parts with or without rotary or movable components and parts, and various rail kinematic pair parts with guide of components and parts, designing and manufacturing omnidirectional adjustable static precision control components and parts in multi-surface cubes of the omnidirectional adjustable movable precision control components and parts and various combined components and parts thereof, and further designing and manufacturing omnidirectional precision control adjustment components and parts in multi-surface cubes of added multiple groups of various components and parts at various orientations among the movable precision control components and parts, the static precision control components and parts, and the combinations according to the various precision technical requirements for respective concentric and geometric tolerances of multiple parts and multiple kinematic pairs with various structures set by the design;
      in the adjustment process, taking omnidirectional adjustable static precision control components as corresponding objects, carrying out adjustment with omnidirectional precision control adjustment components and parts, allowing the omnidirectional adjustable movable precision control components thereof to move; carrying out fine adjustment with a coordination of comparison and calculation of values measured by various instruments and the various precision technical requirement values for concentric and geometric tolerances set by the design, respectively enabling components and parts with various structures, comprising various components and parts with or without rotary or movable components and parts, various rail kinematic pair parts with guide of components and parts, and the combinations thereof, to meet the various precision technical requirements for concentric and geometric tolerances, respectively, and locking after an overall check;
      overall assembly of various high-precision electromechanical equipment
      after completing the assembly work of various components and parts of the various mechanical components and electromechanical components, carrying out overall assembly work of the electromechanical equipment according to the various precision technical requirements for concentric and geometric tolerances for multiple components set by the design, respectively assembling mechanical components and electromechanical components with various structures and different uses and the combinations, as well as the various omnidirectional adjustable movable precision control components, the various omnidirectional adjustable static precision control components and various omnidirectional precision control adjustment components and parts, and forming the whole electromechanical equipment with omnidirectional precision adjustable high precision manufacturing control structures with various structures according to different use combinations, comprising:
         respectively designing and manufacturing omnidirectional adjustable structure movable precision-control components in multi-surface cubes of various mechanical components and electromechanical components assembled by various different components and parts, respectively designing and manufacturing omnidirectional adjustable structure static precision-control components in multi-surface cubes of the omnidirectional adjustable movable precision control components and various combined components thereof, and further respectively designing and manufacturing omnidirectional precision control adjustment components and parts in multi-surface cubes of added multiple groups of various components and parts at various orientations among the movable precision-control components, the static precision control components, and the combinations according to the various precision technical requirements for concentric and geometric tolerances for multiple components set by the design; and in the adjustment process, taking omnidirectional adjustable static precision control components as corresponding objects, carrying out adjustment with omnidirectional precision control adjustment components and parts, allowing the omnidirectional adjustable movable precision control components thereof to move, carrying out fine adjustment by the cooperation of comparison and calculation of values measured by various instruments and various precision technical requirement values for concentric and geometric tolerances, respectively enabling combinations of mechanical components and electromechanical components with various structures to meet the various precision technical requirements for concentric and geometric tolerances set by the design, and locking after an overall check. The present invention is accomplished.

As compared with the prior art, the present invention has the following notable advantages:
1. breaking the global precision control for electromechanical equipment addressed by hand chipping, repeated processing and repeated assembly; reducing the overall machining error and the accumulated error on assembly of various conventionally designed and manufactured components and parts, components and electromechanical equipment; and saving the manpower and material resources;
2. precision control for electromechanical equipment: from components and parts to components and to the whole electromechanical equipment, i.e., from smaller to larger sizes and inside to outside, the design, manufacturing and assembly are manufactured and controlled from the very beginning, realizing small accuracy error in distance between the rotor and the stator of each motor, so that as compared with various motors of the same power, the shaft distal-end runout and the shaft vibration value are low, the reciprocating repeated positioning accuracy is high, thus effectively controlling the accuracy error in the displacement generated during the operation of the electromechanical equipment and thoroughly reducing the loss of energy sources; and
3. by the application of the present invention, the precision and overall comprehensive capabilities of the electromechanical equipment and the working efficiency as well as economic performance of the whole industry are improved.

The scope of applications of the present invention:

The present invention is applied to electromechanical equipment with high precision requirements, such as motors, electromechanical products, lathes, milling machines, boring machines, grinding machines, drilling machines, engraving machines, machining centers of above three linkages, measuring instruments of above three linkages, mechanical electromechanical digital control automatic integrated equipment and assembly equipment, medical equipment, textile equipment, petrochemical equipment, automobiles, trains, railway tracks, marine vessels, aircraft and national defense and military equipment.

### Detailed Description of the Invention

The present invention is further described in combination with embodiments.

### Embodiment 1: A high-precision manufacturing and control method of an AC double rotary spindle head

(1) Designing of the AC double rotary spindle head
   The AC double rotary spindle head is composed of one spindle motor, multiple torque motors and other components respectively, wherein the spindle motor is composed of a stator, a rotor, a bearing, an encoder, a manual or automatic tool changer loose lacing device and other components and parts respectively; and the torque motor is composed of a stator, a rotor, a bearing, an encoder and other components and parts respectively; the functions of the spindle motor in the AC double rotary spindle head are designed to determine the rated power, the rated voltage, the highest rotation speed, torque and other functions of the spindle motor based on users' requirements, and the function of the spindle motor in the AC double rotary spindle head is a function designed and determined through various mechanical integrated calculations on the basis of the determined functions of the spindle motor;
   in the design, concentric points are respectively set, and based on various mechanical principles, a rotor, a stator, an encoder, a manual or automatic tool changer loose lacing device and other static and moving components and parts are respectively combined to form the spindle motor design; then, a rotor, a stator, an encoder and other components and parts are respectively combined to form the torque motor design; finally, respectively combining one spindle motor, multiple torque motors and other components to form the comprehensive design of the AC double rotary spindle head, forming concentric and geometric tolerances based on the above-mentioned combinations with different purposes, and disposing omnidirectional precision-adjustable manufacturing and control structures in multi-surface cubes of the above-mentioned components and parts with various structures, comprising:
   respectively disposing omnidirectional adjustable movable precision control components and parts in multi-surface cubes of the various components and parts with or without rotary or movable components and parts, and disposing omnidirectional adjustable movable precision control components and parts in multi-surface cubes of components of the spindle motor and multiple torque motors assembled by various different components and parts;
   respectively disposing omnidirectional adjustable static precision control components and parts in multi-surface cubes of the omnidirectional adjustable movable precision control components and parts, and various combined components and parts thereof;
   further respectively disposing omnidirectional precision control adjustment components and parts in multi-surface cubes of added multiple groups of various components and parts among various omnidirectional adjustable movable precision control components and parts, various omnidirectional adjustable static precision control components and parts, and the combinations;
   based on the design of the above-mentioned different use combinations, performing high-precision manufacturing and control on omnidirectional precision adjustable structures with various structures, and forming various high-precision AC double rotary spindle heads, and setting various precision technical requirement values for concentric and geometric tolerances for multiple parts and multiple components with various structures while designing;
(2) Manufacturing of components and parts of the AC double rotary spindle head
   After the above-mentioned design work is done, based on the technical requirements of the designed overall drawing of the AC double rotary spindle head, formulating the manufacturing process regulation, purchasing various required materials and components and parts, and manufacturing the required various components and parts, mainly comprising: various omnidirectional adjustable movable precision control adjustment components and parts, various omnidirectional adjustable static precision control adjustment components and parts, and various omnidirectional precision control adjustment components and parts;
   disposing the omnidirectional adjustable movable precision control components and parts in multi-surface cubes of various components and parts, disposing the omnidirectional adjustable movable precision control components and parts in multi-surface cube of various components and parts with or without rotating bearing components and parts, disposing the omnidirectional adjustable movable precision control components in the multi-surface cube of components of the spindle motor and multiple torque motors assembled by various different components and parts;
   respectively disposing the omnidirectional adjustable static precision control components and parts in multi-surface cubes of the omnidirectional adjustable movable precision control components and parts, and various combined components and parts thereof components and parts; further respectively disposing the omnidirectional precision control adjusting components and parts in multi-surface cubes of added multiple groups of various components and parts in the orientations among the various omnidirectional adjustable movable precision control components and parts, the various omnidirectional adjustable static precision control components and parts, and the combinations, wherein all the manufactured components and parts should be subjected to strict quality inspection one by one;
(3) Assembling of the AC double rotary spindle head
   Sub-assembling of various components and parts of the AC double rotary spindle head
   after the quality inspection work of designing, manufacturing, or purchasing the various components and parts is completed, according to the technical requirements for concentric and geometric tolerances, formulating assembling, adjusting and locking process regulations; according to the design drawings, sub-assembling the various components and parts of the AC double rotary spindle head, setting the concentric reference points of respective combinations of the components and parts with various structures, comprising the components and parts with or without rotating bearing components and parts, according to different purposes, respectively assembling the various components and parts combined according to different purposes, and respectively assembling so as to design and dispose the omnidirectional precision-adjustable precision control components and parts in multi-surface cubes of components and parts with various structures, comprising various components and parts with or without rotating or rotating bearing components and parts; respectively assembling and forming the omnidirectional precision-adjustable high-precision manufacturing and control structure components of the components and parts with various structures according to different purposes, comprising:
   respectively designing and manufacturing omnidirectional adjustable movable precision control components and parts in multi-surface cubes of various components and parts, respectively designing and manufacturing omnidirectional precision-adjustable static precision control components and parts in the multiple-surface cubes of various combined components and parts of the above-mentioned omnidirectional adjustable movable precision control components and parts, and designing and manufacturing omnidirectional precision control adjustment components and parts in multi-surface cubes of added multiple groups of various components and parts in the orientations among the above-mentioned movable precision control components and parts, the static precision control components and parts, and the combinations, according to the various precision technical requirements for respective concentric and geometric tolerances of multiple parts and multiple kinematic pairs with various structures set by the design;
   respectively designing and manufacturing omnidirectional adjustable movable precision control components and parts in multi-surface cubes of various components and parts with or without rotary or movable components and parts, respectively designing and manufacturing omnidirectional adjustable static precision control components and parts in multiple-surface cubes of various combined components and parts of the above-mentioned omnidirectional adjustable movable precision control components and parts, designing and manufacturing omnidirectional precision control adjustment components and parts in multi-surface cubes of added multiple groups of various components and parts in the orientations among the movable precision control components and parts, the static precision control components and parts, and the combinations, according to various precision technical requirements for respective concentric and geometric tolerances of multiple components and parts and multiple kinematic pairs with various structures set by the design;
   in the adjustment process, taking the omnidirectional adjustable static precision control components and parts as corresponding objects, carrying out adjustment with the omnidirectional precision control adjustment components and parts, enabling the omnidirectional adjustable movable precision control component and part to move, carrying out fine adjustment by the cooperation of comparison and calculation of values measured by various instruments and various precision technical requirement values for concentric and geometric tolerances set by the design, respectively enabling the combinations of the components and parts with various structures, comprising various components and parts with or without rotary or movable components and parts and various rail kinematic pair parts with guide of components and parts, to meet the various precision technical requirements for concentric and geometric tolerances, respectively, and locking after an overall check.

Overall assembly of the AC double rotary spindle head

After the operation of assembling the various components and parts of the spindle motor and the torque motors is completed, in accordance with the integral technical requirements for the concentric and geometric tolerance of the designed AC double rotary spindle head, the assembling, formulating adjusting and locking process regulations; carrying out the overall assembly operation of the AC double rotary spindle head according to the design drawings, setting concentric reference points of respective combinations of the spindle motor, the torque motor and mechanical components with various structures according to different purposes, respectively designing and manufacturing the assembled omnidirectional precision-adjustable precision control components in multi-surface cubes of the spindle motor, the torque motor and mechanical components with various structures, forming various integral high-precision AC double rotary spindle heads by different use combinations, comprising:
respectively designing and manufacturing omnidirectional adjustable movable precision control components in multi-surface cubes of the spindle motor and torque motor components and the mechanical components assembled by different components and parts, respectively designing and manufacturing omnidirectional adjustable static precision control components in multi-surface cubes of the aforementioned various combined static components, designing and manufacturing omnidirectional precision control adjustment components and parts in multi-surface cubes of added multiple groups of various components and parts in the orientations among the movable precision control components, the static precision control components, and the combinations, according to the various precision technical requirements for concentric and geometric tolerance of multiple components with various structures set by the design;
in the adjustment process, taking the omnidirectional adjustable static precision control components as corresponding objects, carrying out adjustment with the omnidirectional precision control adjustment components and parts, allowing the omnidirectional adjustable movable precision control component and part to move, carrying out fine adjustment by the cooperation of comparison and calculation of values measured by various instruments and various precision technical requirement values for concentric and geometric tolerances set by the design, respectively enabling the combinations of mechanical components and electromechanical components with various structures to meet the various precision technical requirements for concentric and geometric tolerances, respectively, and locking after an overall check.

### Embodiment 2: High-precision manufacturing and control method of a fixed double-gantry 5-linkage 9-axis processing center

(1) Designing of a fixed double-gantry 5-linkage 9-axis processing center
   For the design of various components and parts, various mechanical components and various electromechanical components of the fixed double-gantry 5-linkage 9-axis processing center, respectively setting concentric points, and based on various mechanical principles, designing components and parts with various structures, comprising various components and parts with or without rotary or movable components and parts, various rail kinematic pair parts with guide of components and parts, various mechanical components, and respective combinations of various electromechanical components such as servo motors, torque motors and AC double rotary spindle heads, forming concentric and geometric tolerances based on the above-mentioned combinations with different purposes, and disposing omnidirectional precision-adjustable manufacturing and control structure in multi-surface cubs of components and parts with various structures comprising various components and parts with or without rotary or movable components and parts, various rail kinematic pair parts with guide of components and parts, various mechanical components and various electromechanical components such as servo motors, torque motors and AC double rotary spindle heads, comprising:
   Respectively disposing omnidirectional adjustable movable precision control components and parts in multi-surface cubes of the components and parts with various structures, respectively disposing the omnidirectional adjustable movable precision control components and parts in the multi-surface cube comprising components and parts with or without rotary or movable components and parts, disposing the omnidirectional adjustable movable precision control components and parts in multi-surface cubes of various rail kinematic pair parts with guide of components and parts, and disposing the omnidirectional adjustable movable precision control components and parts in multi-surface cubes of various mechanical components sub-assembled by various different components and parts and the various electromechanical components such as servo motors, torque motors and AC double rotary spindle heads;
   respectively disposing omnidirectional adjustable static precision control components and parts in multi-surface cubes of the above-mentioned omnidirectional adjustable movable precision control components and parts, and various combined components and parts thereof;
   further respectively disposing omnidirectional precision control adjustment components and parts in multi-surface cubes of added multiple groups of various components and parts in the orientations among the various omnidirectional adjustable movable precision control components and parts, the various omnidirectional adjustable static precision control components and parts, and the combinations, according to the various technical omnidirectional precision requirements for respective concentric and geometric tolerances of multiple parts, multiple kinematic pairs and multiple components with various structures set by the design;
   based on the design of the above-mentioned different use combinations, carrying out high-precision manufacturing and control of omnidirectional precision-adjustable structures with various structures to forming various high-precision electromechanical equipment, and setting various precision technical requirements for respective concentric and geometric tolerances of multiple parts, multiple kinematic pairs and multiple components with various structures set by the design;
(2) manufacturing of the components and parts of the fixed double-gantry 5-linkage 9-axis processing center
   After the above-mentioned design work is completed, based on the technical requirements of the designed overall drawing of the AC double rotary spindle head, formulating the manufacturing process regulation, purchasing various required materials and components and parts, and manufacturing various components and parts required, components and parts mainly comprising: disposing omnidirectional precision-adjustable precision control structures in multi-surface cubes of components and parts with various structures comprising various components and parts with or without rotary or movable components and parts, various rail kinematic components and parts, various mechanical components and various electromechanical components such as servo motors, torque motors and AC double rotary spindle heads, comprising
   respectively disposing omnidirectional adjustable movable precision control components and parts in the multi-surface cube with the above-mentioned various components and parts; in the multi-surface cube comprising various components and parts with or without rotary or moving components and parts, disposing omnidirectional adjustable movable precision control components and parts; in the multi-surface cube with various rail kinematic pair parts with guide of components and parts, disposing omnidirectional adjustable movable precision control components and parts; in the multi-surface cube with various mechanical components sub-assembled by different components and parts and various electromechanical components such as servo motors, torque motors and AC double rotary spindle heads, disposing omnidirectional adjustable movable precision control components and parts;
   respectively disposing the omnidirectional adjustable static precision control components and parts in multi-surface cubes of the omnidirectional adjustable movable precision control components and parts, and various combined components and parts thereof components and parts; further respectively disposing omnidirectional precision control adjustment components and parts in multi-surface cubes of added multiple groups of various components and parts, increased in the orientations among various omnidirectional adjustable movable precision control components and parts, various omnidirectional adjustable static precision control components and parts, and the combinations, according to various technical omnidirectional precision requirements for respective concentric and geometric tolerances of multiple parts, multiple kinematic pairs and multiple components with various structures, wherein all the manufactured components and parts should be subjected to strict quality inspection.
(3) Assembling of the fixed double-gantry 5-linkage 9-axis processing center Assembling of various components and parts of the fixed double-gantry 5-linkage 9-axis processing center
   After the aforementioned quality inspection work of designing, manufacturing or purchasing of various components and parts and the like is completed, formulating assembling, adjusting and locking process regulations according to the technical requirements for concentric and geometric tolerances; assembling various components and parts of various mechanical components and various electromechanical components such as servo motors, torque motors and AC double rotary spindle heads according to the design drawing; at the same time of assembling, disposing components and parts with various structures, comprising the concentric reference points combined respectively according to different purposes of various components and parts with or without rotary or moving components and parts and various rail kinematic pair parts with guide of components and parts; respectively assembling components and parts with various structures combined according to different purposes, comprising various components and parts with or without rotary or moving components and parts and various rail kinematic pair parts with guide of components and parts; and respectively assembling components and parts with various structures, comprising various components and parts with or without rotary or moving components and parts and various rail kinematic pair parts with guide of components and parts, respectively assembling omnidirectional precision-adjustable high-precision manufacturing and control structure components forming components and parts with various structures according to different purposes, comprising:
   respectively designing and manufacturing omnidirectional adjustable movable precision control components and parts in multi-surface cubes of various components and parts, respectively designing and manufacturing omnidirectional precision-adjustable static precision control components and parts in multiple-surface cubes of the above-mentioned various combined components and parts, further respectively disposing omnidirectional precision control adjustment components and parts in the multi-surface cubs of various components and parts, increased in positions among the omnidirectional adjustable movable precision control components and parts, omnidirectional adjustable static precision control components and parts, and the combinations, according to various omnidirectional precision technical requirements for respective concentric and geometric tolerances of multiple parts with various structures set by the design;
   respectively designing and manufacturing omnidirectional adjustable movable precision control components and parts in the multi-surface cubs comprising various components and parts with rotary or movable components and parts, respectively designing and manufacturing omnidirectional adjustable static precision control components and parts in multi-surface cubes of the above-mentioned various combined components and parts, and further respectively disposing omnidirectional precision control adjustment components and parts in multi-surface cubes of added multiple groups of various components and parts in the orientations among the omnidirectional adjustable movable precision control components and parts, the omnidirectional adjustable static precision control components and parts, and the combinations, according to various omnidirectional precision technical requirements for concentric and geometric tolerances of multiple parts with various structures set by the design;
   respectively designing and manufacturing omnidirectional adjustable movable precision control components and parts in multi-surface cubs of various components and parts without rotary or movable components and parts, respectively designing and manufacturing omnidirectional adjustable static precision control components and parts in the multi-surface cubs of the above-mentioned various combined components and parts, and further respectively disposing omnidirectional precision control adjustment components and parts in multi-surface cubs of added multiple groups of various components and parts in the orientations among the omnidirectional adjustable movable precision control components and parts, the omnidirectional adjustable static precision control components and parts, and the combinations, according to various omnidirectional precision technical requirements multi-surface cubs for respective concentric and geometric tolerances of multiple parts with various structures set by the design;
   respectively designing and manufacturing omnidirectional adjustable movable precision control components and parts in multi-surface cubs of various rail kinematic pair parts with guide of components and parts, respectively designing and manufacturing omnidirectional adjustable static precision control components and parts in the multi-surface cubs of the above-mentioned various combined components and parts, and further respectively disposing omnidirectional precision control adjustment components and parts in the multi-surface cubs of added multiple groups of various components and parts in the orientations among the omnidirectional adjustable movable precision control components and parts, the omnidirectional adjustable static precision control components and parts, and the combinations, according to various omnidirectional precision technical requirements for respective concentric and geometric tolerances of multiple kinematic pairs with various structures set by the design;
   in the adjustment process, taking the omnidirectional adjustable static precision control component as corresponding objects, carrying out adjustment with the omnidirectional precision control adjustment components and parts, allowing the omnidirectional adjustable movable precision control component to move, carrying out fine adjustment by the cooperation of comparison and calculation of values measured by various instruments and various precision technical requirement values for concentric and geometric tolerances set by the design, respectively enabling the combinations of the components and parts with various structures comprising various components and parts with or without rotary or movable components and parts and various rail kinematic pair parts with guide of components and parts to meet the various precision technical requirements for concentric and geometric tolerances, respectively, and locking after an overall check;
   Overall assembly of the fixed double-gantry 5-linkage 9-axis processing center
   After the operation of assembling the various components and parts of the above-mentioned various mechanical components and various electromechanical components such as servo motors, torque motors and AC double rotary spindle heads is completed, in accordance with the integral technical requirements for the concentric and geometric tolerance of the designed fixed double-gantry 5-linkage 9-axis processing center, formulating assembling, adjusting and locking process regulations, and carrying out overall assembly operation of the fixed double-gantry 5-linkage 9-axis processing center based on the design drawings; while assembling, setting the concentric reference points respectively combined according to different purposes of the mechanical components and electromechanical components, such as servo motors, torque motors and AC double rotary spindle heads, respectively, assembling mechanical components and electromechanical components, such as servo motors, torque motors and AC double rotary spindle heads, with various structures combined based on different purposes, respectively assembling mechanical components and electromechanical components, such as servo motors, torque motors and AC double rotary spindle heads, with various structures, respectively forming various high-precision fixed double-gantry 5-linkage 9-axis processing center based on different purposes, comprising:
      respectively designing and manufacturing omnidirectional adjustable movable precision control components in multiple-surface cubes of various mechanical components and electromechanical components such as servo motors, torque motors and AC double rotary spindle heads, assembled with various different components and parts, respectively designing and manufacturing omnidirectional adjustable structure static precision control components in the multiple-surface cubes of the above-mentioned omnidirectional adjustable movable precision control components and the various combined components thereof, and further respectively designing and manufacturing omnidirectional precision control adjustment components and parts in the multi-surface cubs of various components and parts, increased in positions among the movable precision control components and static precision control components, and the combinations according to the various precision technical requirements for concentric form and position tolerances of various components with various structures set by the design;
      in the adjustment process, taking the omnidirectional adjustable static precision control components as corresponding objects, carrying out adjustment with the omnidirectional precision control adjustment components and parts, allowing the omnidirectional adjustable movable precision control component to move, carrying out fine adjustment by the cooperation of comparison and calculation of values measured by various instruments and various precision technical requirement values for concentric and geometric tolerances set by the design, respectively enabling combinations of mechanical components and electromechanical components with various structures to meet the various precision technical requirements for concentric and geometric tolerances, respectively, and locking after an overall check.

## Claims

1. A high-precision manufacturing control method of electromechanical equipment, **characterized by** being implemented according to the following process:
(1) designing:
designing components and parts with various structures for designs of components and parts of various electromechanical equipment, forming concentric and geometric tolerances according to different use combinations, setting various precision technical requirement values for respective concentric and geometric tolerances of multiple parts, multiple kinematic pairs and multiple components with various structures while designing, disposing omnidirectional precision adjustable manufacturing control structures in multi-surface cubes of components and parts with various structures comprising various components and parts with or without rotary or movable components and parts, various rail kinematic pair parts with guide of components and parts, various mechanical components and electromechanical components, comprising:
respectively components and parts disposing omnidirectional adjustable movable precision control components and parts in multi-surface cubes of the above-mentioned components and parts with various structures;
respectively disposing omnidirectional adjustable static precision control components and parts in multi-surface cubes of the above-mentioned omnidirectional adjustable movable precision control components and parts, and various combined components and parts thereof components and parts;
further disposing omnidirectional precision control adjustment components and parts in multi-surface cubes of added multiple groups of various components and parts at various orientations among the various omnidirectional adjustable movable precision control components and parts, the various omnidirectional adjustable static precision control components and parts, and the combinations; and
based on the design for different use combinations, performing high-precision manufacturing control on omnidirectional precision adjustable structures with various structures, and forming various high-precision electromechanical equipment;
(2) manufacturing:
after completing designing, purchasing various desired materials, and manufacturing the components and parts with various structures required by the design, mainly comprising: various omnidirectional adjustable movable precision control adjustment components and parts, various omnidirectional adjustable static precision control adjustment components and parts, and various omnidirectional precision control adjustment components and parts; and
(3) assembling:
performing sub-assembly of various mechanical components and electromechanical components after completing designing and manufacturing, performing the assembly work of various components and parts of various mechanical components and electromechanical components according to various precision technical requirements for respective concentric and geometric tolerances of multiple parts and multiple kinematic pairs with various structures set by the design, respectively assembling different use combinations of components and parts with various structures, as well as various omnidirectional adjustable movable precision control components and parts, various omnidirectional adjustable static precision control components and parts and various omnidirectional precision control adjustment components and parts, and respectively assembling and forming various omnidirectional precision adjustable high-precision manufacturing control structure components according to different purposes, comprising:
respectively designing and manufacturing omnidirectional adjustable movable precision control components and parts in multi-surface cubes of various components and parts, various components and parts with or without rotary or movable components and parts, and various rail kinematic pair parts with guide of components and parts, respectively designing and manufacturing omnidirectional adjustable static precision control components and parts in multi-surface cubes of the omnidirectional adjustable movable precision control components and parts and various combined components and parts thereof, and further respectively designing and manufacturing omnidirectional precision control adjustment components and parts in multi-surface cubes of added multiple groups of various components and parts at various orientations among the movable precision control components and parts, the static precision control components and parts, and the combinations according to various precision technical requirements for respective concentric and geometric tolerances for multiple parts and multiple kinematic pairs with various structures set by the design; and
in the adjustment process, taking the omnidirectional adjustable static precision control components as corresponding objects, carrying out adjustment with the omnidirectional precision control adjustment components, allowing the omnidirectional adjustable movable precision control components thereof to move, carrying out fine adjustment by the cooperation of comparison and calculation of values measured by various instruments and various precision technical requirement values for concentric and geometric tolerances set by the design, respectively enabling the combinations of the components and parts with various structures comprising various components and parts with or without rotary or movable components and parts and various rail kinematic pair parts with guide of components and parts to meet the various precision technical requirements for concentric and geometric tolerances, respectively, and locking after an overall check;
overall assembly of various high-precision electromechanical equipment after completing assembling various components and parts of the various mechanical components and electromechanical components, carrying out overall assembly work of the electromechanical equipment according to various precision technical requirements for respective concentric and geometric tolerances of multiple components set by the design, respectively assembling different use combinations of mechanical components and electromechanical components with various structures, as well as various omnidirectional adjustable movable precision control components, various omnidirectional adjustable static precision control components and various omnidirectional precision control adjustment components and parts, and assembling and forming the whole electromechanical equipment with omnidirectional precision adjustable high-precision manufacturing control structures with various structures according to different purposes, comprising:
respectively designing and manufacturing omnidirectional adjustable structure movable precision-control components in multi-surface cubes of various mechanical components and electromechanical components assembled with various different components and parts, respectively designing and manufacturing omnidirectional adjustable structure static precision-control components in multi-surface cubes of the aforementioned omnidirectional adjustable movable precision control components and various combined components thereof, and further respectively designing and manufacturing omnidirectional precision control adjustment components and parts in multi-surface cubes of added multiple groups of various components and parts at various orientations among the movable precision-control components, the static precision control components, and the combinations according to various precision technical requirements for respective concentric and geometric tolerances of multiple components set by the design; and in the adjustment process, taking the omnidirectional adjustable static precision control components as corresponding objects, performing adjustment with the omnidirectional precision control adjustment components and parts, allowing the omnidirectional adjustable movable precision control components thereof to move, carrying out fine adjustment by the cooperation of comparison and calculation of values measured by various instruments and various precision technical requirement values for concentric and geometric tolerances set by the design, respectively enabling the combinations of mechanical components and electromechanical components with various structures to meet the various precision technical requirements for concentric and geometric tolerances, respectively, and locking after an overall check.

2. The high-precision manufacturing control method of electromechanical equipment according to claim 1, **characterized in that** the high-precision manufacturing control method is used for the electromechanical equipment that includes motors, electromechanical products, lathes, milling machines, boring machines, grinding machines, drilling machines, engraving machines, machining centers of above three linkages, measuring instruments of above three linkages, mechanical electromechanical digital control automatic integrated equipment, medical equipment, textile equipment, petrochemical equipment, automobiles, trains, railway tracks, marine vessels, aircraft and national defense and military equipment.
